# EUROPÄISCHE PATENTSCHRIFT

(11) **EP 2 238 318 B1**
(45) Veröffentlichungstag und Bekanntmachung des Hinweises auf die Patenterteilung: **05.03.2014**
(21) Anmeldenummer: 08866937.9
(22) Anmeldetag: 22.12.2008
(51) Int. Cl.: F01K 25/02, F01K 27/00, F01B 21/02, F01B 25/00, F01B 29/10

(54) **WÄRMEKRAFTMASCHINE**
HEAT ENGINE
MOTEUR THERMIQUE

(30) Priorität: 03.01.2008 AT 72008
(43) Veröffentlichungstag der Anmeldung: 13.10.2010
(73) Patentinhaber: Loidl, Walter, 1150 Wien (AT)
(72) Erfinder: Loidl, Walter, 1150 Wien (AT)
(74) Vertreter: Weiser, Andreas
(86) Internationale Anmeldenummer: PCT/AT2008/000469
(87) Internationale Veröffentlichungsnummer: WO 2009/082773

(56) Entgegenhaltungen:
- CH-A- 521 516
- DE-A1- 10 126 403
- OA-A- 11 253
- US-A- 4 452 047
- US-A- 5 916 140
- US-A1- 2009 038 307

## Beschreibung

Die vorliegende Erfindung betrifft eine Wärmekraftmaschine, insbesondere für den Niedertemperaturbetrieb zur Verwertung von Solarwärme, Abwärme aus biologischen oder industriellen Prozessen od.dgl., mit:
zumindest zwei Zylinder-Kolbeneinheiten, die jeweils ein unter einem Vorspanndruck stehendes Dehnungsfluid enthalten, welches bei einer Temperaturänderung sein Volumen ändert und so den Kolben bewegt,
Mitteln zur individuell steuerbaren Wärmezufuhr zum Dehnungsfluid jeder Zylinder-Kolbeneinheit, und
einer die Wärmezufuhrmittel steuernden Steuereinrichtung, um jedes Dehnungsfluid abwechselnd erwärmen und abkühlen zu lassen und dadurch die Kolben zu bewegen.

Eine derartige Wärmekraftmaschine ist aus der US 5 916 140 bekannt. Wirksame Dehnungsfluide erfordern häufig einen bestimmten Vorspanndruck, um im gewünschten Betriebstemperaturbereich einen signifikanten Dehnungskoeffizienten zeigen. Ein Beispiel dafür ist flüssiges Kohlendioxid, welches unter einem Druck von ca. 60 - 70 bar bei einer Erwärmung von 20°C auf 30°C sein Volumen um das etwa 2,2-fache ändert.

Die US 5 916 140 offenbart verschiedene Varianten, um das Dehnungsfluid in den Zylinder-Kolbeneinheiten unter den erforderlichen Vorspanndruck zu setzen. Zum einen werden Metall- oder Gasfedern vorgeschlagen, um die Kolben in Richtung auf das Dehnungsfluid vorzuspannen. Mit einer solchen wegabhängigen Federkraft läßt sich jedoch kein von der Kolbenbewegung unabhängiger Vorspanndruck erreichen. Zum anderen wird eine mechanische Kopplung zweier Zylinder-Kolbeneinheiten über eine Kurbelwelle oder durch Boxeranordnung beschrieben, damit der jeweils ausfahrende Kolben den Vorspanndruck auf das Dehnungsfluid des einfahrenden Kolbens aufrechterhält. Eine solche starre Kopplung setzt jedoch voraus, daß die Erwärm- und Abkühlphasen etwa gleich lang sind, da sonst ein zu langsam einfahrender Kolben den ausfahrenden behindert, was zu Lasten des Wirkungsgrades geht, oder ein zu langsam ausfahrender Kolben zu wenig Vorspanndruck erzeugt, um den Betrieb zu gewährleisten.

In der US 5 916 140 wird als Lösung des letztgenannten Problems vorgeschlagen, die Abkühlphase durch möglichst rasche Wärmeabfuhr zu beschleunigen, so daß sie stets kürzer als die Erwärmphase ist. Dies ist in der Praxis jedoch kaum zu bewerkstelligen, denn gerade bei der Nutzung von Solarwärme ist mit stark variierender Wärmezufuhr zu rechnen. So können beispielsweise für die Erwärmung von flüssigem Kohlendioxid von 20°C auf 30°C zu Mittag eine Wärmezufuhrtemperatur von 70°C und damit eine Temperaturdifferenz von 40 - 50°C zur Verfügung stehen, wogegen für die Abkühlung von 30°C auf 20°C - selbst bei Zwangskühlung mit 5°C kaltem Wasser - lediglich eine Temperaturdifferenz von 15 - 25°C vorliegt, wodurch eine etwa doppelt so lange Abkühlphase wie Erwärmphase zu erwarten ist. Anderseits kann in den Morgen- und Abendstunden das Temperaturniveau der Solaranlage beispielsweise auch nur 30 - 40°C betragen, wodurch sogar mit einer längeren Erwärmphase als Abkühlphase zu rechnen ist.

Die Erfindung setzt sich daher zum Ziel, eine Wärmekraftmaschine der eingangs genannten Art zu schaffen, welche auch bei stark schwankender Wärmezufuhr stets einen guten Wirkungsgrad erzielt. Dieses Ziel wird gemäß der Erfindung dadurch erreicht,
daß die Kolben aller Zylinder-Kolbeneinheiten von einem gemeinsamen Vorspannfluid beaufschlagt sind, um einen gemeinsamen Vorspanndruck auf die Dehnungsfluide auszuüben,
die Steuereinrichtung mit einem Druckmesser für den Vorspanndruck ausgestattet ist, und
die Steuereinrichtung die Erwärm- und Abkühlphasen der Wärmezufuhrmittel in Abhängigkeit vom gemessenen Vorspanndruck steuert, um diesen innerhalb eines vorgegebenen Bereichs zu halten.

Auf diese Weise wird eine variable, dynamische Kopplung der Zylinder-Kolbeneinheiten erreicht. Die Steuerung der Kolbenbewegung abhängig vom Vorspanndruck vermeidet einerseits eine durch unnotwendig hohen Vorspanndruck bedingte Wirkungsgradverschlechterung der Maschine und gewährleistet anderseits stets den erforderlichen Vorspanndruck für das Dehnungsfluid. Im Ergebnis wird auch unter wechselnden Umgebungsbedingungen ein stets optimaler Betrieb erreicht.

Eine besonders vorteilhafte Ausführungsform der Wärmekraftmaschine der Erfindung weist zumindest drei Zylinder-Kolbeneinheiten auf und zeichnet sich dadurch aus, daß die Steuereinrichtung die Anzahl von Zylinder-Kolbeneinheiten, die sich zu einem Zeitpunkt in der Erwärmphase befinden, gegenüber der Anzahl von Zylinder-Kolbeneinheiten, welche sich zum selben Zeitpunkt in der Abkühlphase befinden, erhöht, wenn der Vorspanndruck den vorgegebenen Bereich unterschreitet, und verringert, wenn der Vorspanndruck den vorgegebenen Bereich überschreitet. Dadurch kann der Betrieb an besonders stark schwankende Umgebungsbedingungen angepaßt werden. Beispielsweise können in den temperaturschwachen Morgen- oder Abendstunden einer Solaranlage etwa gleich viele Zylinder-Kolbeneinheiten in der Erwärm- und in der Abkühlphase betrieben werden, hingegen in der Mittagshitze wenige rasch erwärmende Zylinder-Kolbeneinheiten vielen langsam abkühlenden Zylinder-Kolbeneinheiten gegenüberstehen.

Gemäß einem weiteren Merkmal der Erfindung kann die Steuereinrichtung zur Feinjustierung auch jede einzelne Erwärm- und/oder Abkühlphasen verkürzen oder verlängern, um den Vorspanndruck innerhalb des vorgegebenen Bereichs zu halten.

Als Dehnungsfluid kann grundsätzlich jedes in der Technik bekannte Fluid mit entsprechend signifikantem Wärmedehnungskoeffizienten verwendet werden. Besonders günstig ist es, wenn das Dehnungsfluid - wie an sich aus der US 5 916 140 bekannt - flüssiges Kohlendioxid enthält und der Vorspanndruck größer oder gleich dem Verflüssigungsdruck von Kohlendioxid bei der Arbeitstemperatur ist. Flüssiges Kohlendioxid eignet sich aufgrund seines hohen Wärmedehnungskoeffizienten bei Raumtemperatur besonders für einen Betrieb der Wärmekraftmaschine im Niedertemperaturbereich zur Ausnützung von Solarwärme, Abwärme aus biologischen oder industriellen Prozessen od.dgl. Darüber hinaus kann damit aus Verbrennungsprozessen anfallendes Kohlendioxid einer nutzbringenden Sekundärverwertung zugeführt werden, in der es keinen umweltschädlichen Treibhauseffekt hervorruft. Die Wärmekraftmaschine der Erfindung leistet demgemäß auch einen Beitrag zur umweltschonenden CO₂-Sequestrierung im Sinne eines "Carbon Dioxide Capture and Storage"-Prozesses (CSS).

Auch das Vorspannfluid kann an sich beliebiger Art sein, beispielsweise Druckluft. Besonders bevorzugt ist das Vorspannfluid jedoch Hydraulikflüssigkeit, was eine kraftschlüssige und zuverlässige Druckkopplung ergibt. Bevorzugt wird dabei der Hydraulikkreis des Vorspannfluids mit einem elastischen Zwischenspeicher ausgestattet, so daß kurzfristige Druckschwankungen bei Umschaltvorgängen oder bei steuerungsnotwendigen individuellen Verkürzungen oder Verlängerungen der Erwärm- und Abkühlphasen vorübergehend absorbiert werden können.

Die Beaufschlagung der Kolben mit dem Vorspannfluid kann auf verschiedenste Arten erfolgen, beispielsweise durch mechanische Ankopplung gesonderter hydraulischer Vorspannzylinder an die Zylinder-Kolbeneinheiten. Bevorzugt werden die Kolben der Zylinder-Kolbeneinheiten gleich als doppeltwirkende Kolben ausgebildet, auf deren eine Seite das Dehnungsfluid und auf deren andere Seite das Vorspannfluid einwirkt, was einen besonders einfachen Aufbau ergibt.

Auch die Auskopplung der von den Zylinder-Kolbeneinheiten geleisteten Arbeit kann auf jede beliebige in der Technik bekannte Art erfolgen, welche die in der Regel nicht-sinusförmigen Verläufe und unterschiedlichen Phasenlagen der Hubbewegungen der einzelnen Kolben berücksichtigt, beispielsweise mittels Freilaufnaben, Planetengetrieben, Ratschen/Klinken-Mechanismen usw. Besonders günstig ist eine hydraulische Auskopplung der Bewegungsarbeit, indem jede Zylinder-Kolbeneinheit einen Arbeitskolben antreibt und alle Arbeitskolben auf ein gemeinsames Arbeitsfluid einer hydraulischen Last wirken.

Eine bevorzugte Ausführungsform der Erfindung zeichnet sich dadurch aus, daß die Wärmezufuhrmittel für jede Zylinder-Kolbeneinheit einen von einem Wärmeträgermedium durchströmten Wärmetauscher aufweisen, der mit einem von der Steuereinrichtung gesteuerten Sperrventil versehen ist. Durch einfaches Öffnen und Schließen der Sperrventile können die Zeitpunkte und Zeitdauern der Erwärmphasen vorgegeben werden, zwischen denen sich dann die Abkühlphasen ergeben.

Die Abkühlphasen können beschleunigt werden, wenn die Wärmezufuhrmittel bevorzugt auch Mittel zur Zwangsabkühlung der Dehnungsfluide in den Abkühlphasen umfassen. Zu diesem Zweck ist es besonders günstig, wenn das Wärmeträgermedium in der Erwärmphase unter Druck steht und die Zwangsabkühlmittel eine steuerbare Druckentspannungseinrichtung für jeden Wärmetauscher aufweist. Dadurch kann das Wärmeträgermedium gleichzeitig als Kühlmittel verwendet werden, indem es durch Druckentspannung zur Abkühlung veranlaßt wird.

Bevorzugt umfaßt die Druckentspannungseinrichtung einen Unterdruck-Zwischenspeicher, der über ein steuerbares Schaltventil an den Wärmtauscher anschaltbar ist, wodurch eine schlagartige Entspannung und damit besonders rasche Abkühlung erreicht werden kann.

Die Erfindung wird nachstehend anhand von in den beigeschlossenen Zeichnungen dargestellten Ausführungsbeispielen näher erläutert. In den Zeichnungen zeigen:
Fig. 1 ein Prinzipschaltbild einer Wärmekraftmaschine der Erfindung mit vier Zylinder-Kolbeneinheiten;
die Fig. 2a bis 2c Zeitdiagramme der Steuerung der Wärmezufuhrmittel und der sich dadurch ergebenden Kolbenbewegungen der Maschine von Fig. 1; und
Fig. 3 ein Blockschaltbild einer praktischen Ausführungsform einer erfindungsgemäßen Wärmekraftmaschine-mit zwei beispielhaften Zylinder-Kolbeneinheiten.

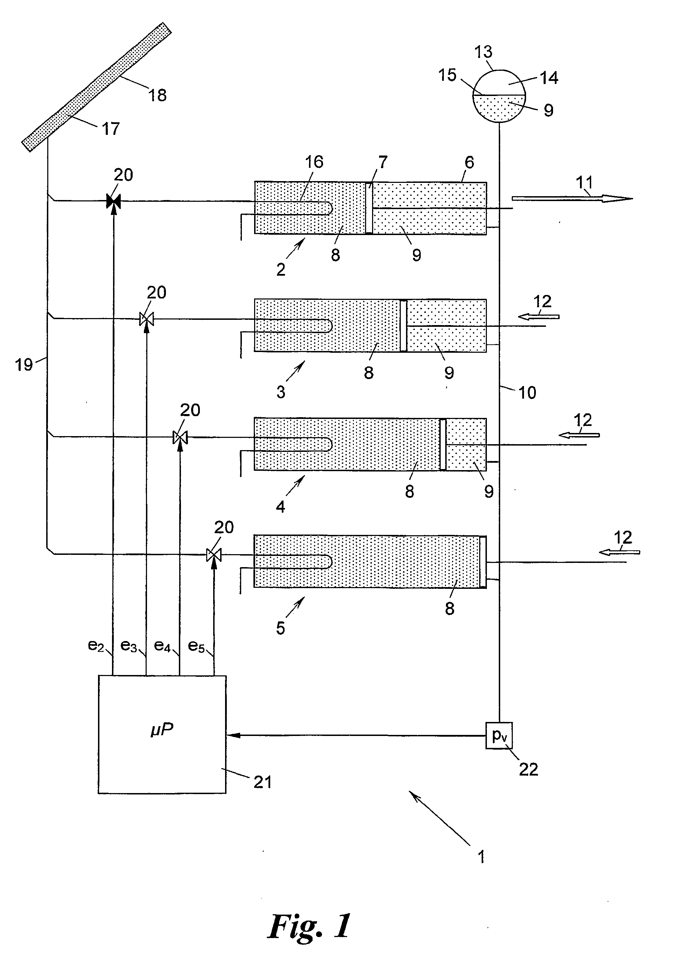

Fig. 1 zeigt eine Wärmekraftmaschine 1 mit vier Zylinder-Kolbeneinheiten 2 - 5. Jede Zylinder-Kolbeneinheit 2 - 5 hat einen Zylinder 6, in dem sich ein Kolben 7 zwischen einer eingefahrenen Stellung (gezeigt bei 2) und einer ausgefahrenen Stellung (gezeigt bei 5) bewegen kann.

Der Raum im Zylinder 6 zur linken Seite des Kolbens 7 wird vollständig von einem Dehnungsfluid 8 eingenommen. Das Dehnungsfluid 8 hat einen hohen Wärmedehnungskoeffizienten und expandiert bei seiner Erwärmung, um den Kolben 7 von der eingefahrenen in die ausgefahrene Stellung zu bewegen, bzw. kontrahiert bei seiner Abkühlung, um den Kolben 7 wieder zurückzubewegen.

Im gezeigten Beispiel ist das Dehnungsfluid 8 flüssiges Kohlendioxid (CO₂), das bei Raumtemperatur einen Verflüssigungsdruck von ca. 65 bar hat. Flüssiges CO₂ zeigt im Bereich von 20°C bis 30°C eine Wärmedehnung um das etwa 2,2-fache. Anstelle von reinem flüssigem Kohlendioxid könnten auch Mischungen von flüssigem Kohlendioxid mit anderen Stoffen als Dehnungsfluid 8 verwendet werden.

Um das CO₂ als Dehnungsfluid 8 in seinem flüssigen Zustand zu halten, wird der Kolben 7 mit einem Vorspanndruck pᵥ größer oder gleich dem Verflüssigungsdruck in Richtung auf das Dehnungsfluid 8 beaufschlagt bzw. vorgespannt.

Der Vorspanndruck pᵥ wird von einem Vorspannfluid 9 ausgeübt, das auf die dem Dehnungsfluid 8 abgewandte Seite jedes Kolbens 7 wirkt. Das Vorspannfluid 9 ist bevorzugt ein Hydrauliköl und zirkuliert in einem allen Zylinder-Kolbeneinheiten 2 - 5 gemeinsamen Hydraulikkreis 10. Das beim Ausfahren eines Kolbens 7 (Pfeil 11) verdrängte Vorspannfluid 9 hält damit den Vorspanndruck pᵥ auf die Dehnungsfluide 8 der einfahrenden Kolben 7 (Pfeile 12) aufrecht. Dadurch wird die Einfahrbewegung der Kolben 7 in der Abkühlphase unterstützt und es wird verhindert, daß der Verflüssigungsdruck in der Abkühlphase unterschritten wird.

Der Hydraulikkreis 10 ist mit einem elastischen Zwischenspeicher 13 ausgestattet, beispielsweise einem Druckbehälter mit Gasfüllung 14 und/oder mit einer elastischen Membran 15, um kurzfristige Druckschwankungen abzupuffern.

Die Erwärmung der Dehnungsfluide 8 in den Zylinder-Kolbeneinheiten 2 - 5 wird mit Hilfe von steuerbaren Wärmezufuhrmitteln 16 - 20 veranlaßt. Die Wärmezufuhrmittel 16 - 19 umfassen im gezeigten Beispiel einen Wärmetauscher 16 für jede Zylinder-Kolbeneinheit 2 - 5, der das Dehnungsfluid 8 wärmeleitend kontaktiert und in dem ein Wärmeträgermedium 17 zirkuliert. Das Wärmeträgermedium 17 wird von einem Solarpanel 18 in einem Wärmeträgerkreis 19 erwärmt (Rückleitungen in Fig. 1 zwecks Übersichtlichkeit nicht gezeigt).

Die Wärmetauscher 16 können von jeder in der Technik bekannten Art sein; bevorzugt sind sie mit Heat-Pipes zur Förderung des Wärmeaustausches und zur raschen und gleichmäßigen Verteilung der zugeführten Wärme in den Dehnungsfluiden 8 ausgestattet.

Jeder Wärmetauscher 16 ist mit einem steuerbaren Sperrventil 20 versehen. Die Sperrventile 20 werden von einer zentralen Steuereinrichtung 21 abwechselnd und intermittierend geöffnet, um jede Zylinder-Kolbeneinheit 2 - 5 abwechselnd zu erwärmen und abzukühlen, dadurch die Dehnungsfluide 8 in den Zylindern 6 abwechselnd zu expandieren und zu kontrahieren und damit letztlich die Kolben 7 hin und her zu bewegen, wobei die Kolbenbewegungen über das Vorspannfluid 9 des Hydraulikkreises 10 synchronisiert sind.

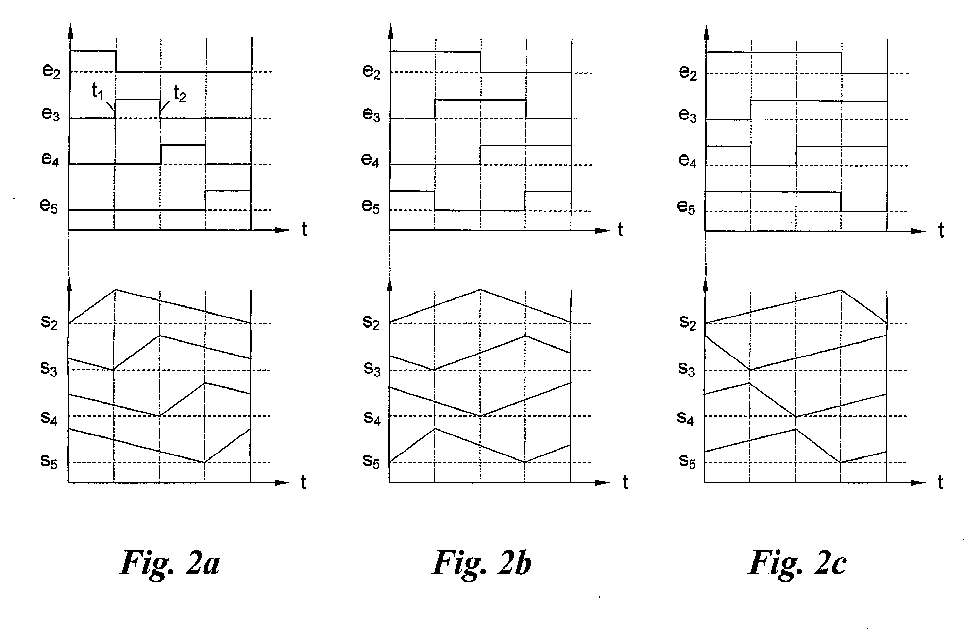

Die Steuereinrichtung 21 betätigt die Sperrventile 20 in Abhängigkeit von einem Meßwert des Vorspanndrucks pᵥ, den sie von einem an den Hydraulikkreis 10 angeschlossenen Druckmesser 22 erhält. Das Regelungsziel der Steuereinrichtung 21 ist es dabei, den Vorspanndruck pᵥ im Hydraulikkreis 10 innerhalb eines vorgegebenen Bereichs zu halten. Dies wird primär mit einer Steuerung der Anzahl jener Zylinder-Kolbeneinheiten 2 - 5, welche sich zu einem bestimmten Zeitpunkt gerade in der Erwärmphase befinden, im Verhältnis zu der Anzahl jener anderen Zylinder-Kolbeneinheiten 2 - 5, die sich zu diesem Zeitpunkt gerade in der Abkühlphase befinden, erreicht, wie nun anhand von Fig. 2 ausführlicher erläutert wird.

In den oberen Zeitdiagrammen der Fig. 2a - 2c sind jeweils die Schaltsignale e₂ - e₅ der Steuereinrichtung 21 zum Öffnen der Sperrventile 20 und in den unteren Zeitdiagrammen die dadurch hervorgerufenen Bewegungen bzw. Wege s₂ - s₅ der Kolben 7 der Zylinder-Kolbeneinheiten 2 - 5 über der Zeit t aufgetragen.

Fig. 2a zeigt einen ersten Betriebszustand der Wärmekraftmaschine 1 für Umgebungsbedingungen, bei denen die Abkühlphase des Dehnungsfluids 8 etwa dreimal so lang ist wie die Erwärmphase, beispielsweise weil die Temperatur des Wärmeträgermediums 17 hoch ist und eine rasche Erwärmung bewirkt. Die Sperrventile 20 werden zyklisch jeweils für etwa ein Viertel der Hubperiode geöffnet. Wie ersichtlich, befinden sich zu einem bestimmten Zeitpunkt immer eine Zylinder-Kolbeneinheit 2 - 5 in der Erwärmphase und drei andere in der Abkühlphase, d.h. das Verhältnis von expandierenden Zylinder-Kolbeneinheiten 2 - 5 zu kontrahierenden Zylinder-Kolbeneinheiten 2 - 5 beträgt hier 1:3.

Fig. 2b zeigt einen zweiten Betriebszustand der Wärmekraftmaschine 1, in dem die Sperrventile 20 zyklisch für jeweils eine halbe Hubperiode geöffnet werden. Das Verhältnis von Zylinder-Kolbeneinheiten 2 - 5 in der Erwärmphase zu Zylinder-Kolbeneinheiten 2 - 5 in der Abkühlphase beträgt hier 2:2, was etwa gleichlangen Aufwärm- und Abkühlphasen, z.B. wegen verringerter Wärmezufuhr, Rechnung trägt.

Sinkt beispielsweise die Temperatur des Wärmeträgermediums 17 noch weiter ab und verlängert sich damit die Erwärmphase noch weiter, geht die Steuereinrichtung 20 in den dritten Betriebszustand von Fig. 2c über, in welchem das Verhältnis von Zylinderkolbeneinheiten 2 - 5 in der Erwärmphase zu Zylinder-Kolbeneinheiten 2 - 5 in der Abkühlphase 3:1 beträgt.

Der jeweilige Betriebszustand Fig. 2a, Fig. 2b bzw. Fig. 2c wird von der Steuerung 21 abhängig vom Vorspanndruck pᵥ eingestellt: Unterschreitet der Vorspanndruck pᵥ eine vorgegebene untere Grenze pₘᵢₙ, insbesondere den Verflüssigungsdruck des Dehnungsfluids 8 bei der aktuellen Betriebstemperatur, wird das Verhältnis von Zylinder-Kolbeneinheiten 2 - 5 in der Erwärmphase zu Zylinder-Kolbeneinheiten 2 - 5 in der Abkühlphase sukzessive erhöht, z.B. 1:3 → 2:2 → 3:1; überschreitet der Vorspanndruck pᵥ eine vorgegebene obere Grenze pₘₐₓ, z.B. den Verflüssigungsdruck plus einer Hystereseschwelle, dann wird dieses Verhältnis sukzessive reduziert, z.B. 3:1 → 2:2 → 1:3.

Es versteht sich, daß die erörterte Regelung auf beliebige Anzahlen von Zylinder-Kolbeneinheiten 2 - 5 erweitert werden kann, beispielsweise auf 3, 5, 6, 7, 8, 12, 24 usw. Zylinder-Kolbeneinheiten. Je mehr Zylinder-Kolbeneinheiten zur Verfügung stehen, desto feiner abgestuft kann die Regelung erfolgen.

Zur Feinregulierung kann die Steuereinrichtung 21 zusätzlich jede einzelne Erwärm- oder Abkühlphase verkürzen oder verlängern, beispielsweise durch Versetzen des Beginns t₁ einer Erwärmphase und/oder des Beginns t₂ einer Abkühlphase bzw. Verändern der Dauer t₂ - t₁. Wenn sich dabei Erwärm- bzw. Abkühlphasen verschiedener Zylinder-Kolbeneinheiten 2 - 5 kurzfristig in einem größeren oder kleineren als dem mit Hilfe der primären Regelung gewählten Verhältnis (1:3, 2:2, 3:1) überlappen, können entsprechende kurzfristige Druckschwankungen des Vorspanndrucks pᵥ mit Hilfe des Zwischenspeichers 13 im Hydraulikkreis 10 vorübergehend absorbiert werden.

An dieser Stelle sei erwähnt, daß in einer stark vereinfachten Ausführungsform der Wärmekraftmaschine 1, welche nur zwei Zylinder-Kolbeneinheiten umfaßt und damit nur das einzige Verhältnis 1:1 zuläßt, die Steuereinrichtung 21 auch nur die letztgenannte Feinregulierung ausführen kann, mit entsprechender Einschränkung hinsichtlich der ausnutzbaren Betriebsbedingungen.

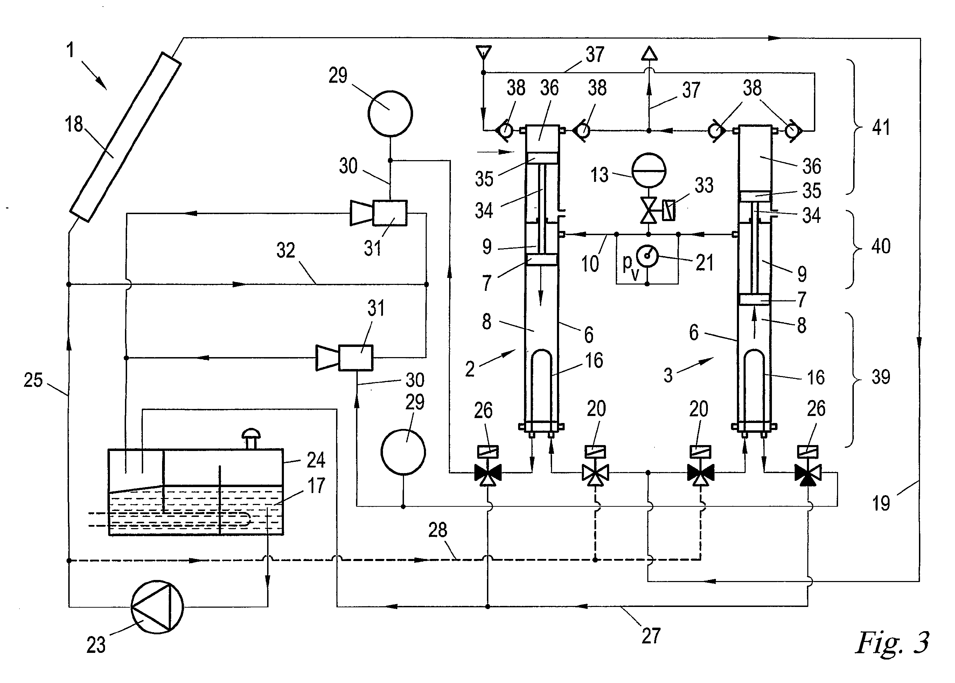

Fig. 3 zeigt eine konkrete Realisierung und Weiterentwicklung der Wärmekraftmaschine 1 von Fig. 1, wobei zwecks Übersichtlichkeit nur zwei Zylinder-Kolbeneinheiten 2, 3 stellvertretend gezeigt sind und die Steuereinrichtung 21 mit ihren Meß- und Steuerleitungen nicht dargestellt ist. Es versteht sich jedoch, daß die in Fig. 3 gezeigte Ausführungsform auf eine beliebige Anzahl von Zylinder-Kolbeneinheiten erweitert werden kann.

Gemäß Fig. 3 fördert eine Pumpe 23 Wärmeträgermedium 17, beispielsweise Refrigerant R 123 der Firma Hoechst, aus einem Vorrat 24 über eine Leitung 25 zum Solarpanel 18, von dort über die Leitung 19 und die Sperrventile 20 zu den Wärmetauschern 16, und von dort über Schaltventile 26 und eine Rückleitung 27 zurück zum Vorrat 24. In dem in Fig. 3 gezeigten Betriebszustand ist gerade das rechte Sperrventil 20 geöffnet und das linke Sperrventil 20 geschlossen, sodaß sich die rechte Zylinder-Kolbeneinheit 3 in der Erwärm- und Expansionsphase und die linke Zylinder-Kolbeneinheit 2 in der Abkühl- und Kontraktionsphase befindet.

Zur Beschleunigung der Abkühlphasen umfassen hier die Wärmezufuhrmittel 16 - 20 auch Mittel zur Zwangsabkühlung der Dehnungsfluide 8. Die Zwangsabkühlmittel können beispielsweise ein optionaler Einspeisepfad 28 für nicht-erwärmtes Wärmeträgermedium 17 sein, um dieses über als Mehrwegeventil ausgebildete Sperrventile 20 in den Abkühlphasen in die Wärmetauscher 16 einzuspeisen. Alternativ könnten gesonderte Wärmetauscher für ein gesondertes Kühlmedium verwendet werden (nicht gezeigt).

Bevorzugt umfassen die Zwangskühlmittel wie gezeigt eine steuerbare Druckentspannungseinrichtung, welche nach dem Schließen des Sperrventils 20 das in einem Wärmetauscher 16 noch unter dem Förderdruck der Pumpe 23 stehende Wärmeträgermedium 17 über das Schaltventil 26 zu einem Unterdruck-Zwischenspeicher 29 hin entspannt. Der Unterdruck im Unterdruck-Zwischenspeicher 29 wird über eine Saugleitung 30 von einem Venturi-Ejektor 31 errichtet, der über eine Leitung 32 kontinuierlich von der Pumpe 23 mit Wärmeträgermedium 17 im Kreis beschickt wird. Durch die schlagartige Expansion des Wärmeträgermediums 17 nach dem Öffnen des Schaltventils 26 verdampft das Wärmeträgermedium 17 und kühlt dadurch das Dehnungsfluid 8 über den Wärmetauscher 16.

Der elastische Zwischenspeicher 13 des Hydraulikkreises 10 ist bei der Ausführungsform von Fig. 3 über ein eigenes Schaltventil 33 wahlweise an den Hydraulikkreis 10 anschaltbar. Die Arbeit der Zylinder-Kolbeneinheiten 2, 3 wird über Kolbenstangen 34 mechanisch auf Arbeitskolben 35 übertragen, die auf ein gemeinsames Arbeitsfluid 36, z.B. Hydrauliköl, wirken, das in einem hydraulischen Lastkreis 37 über Rückschlagventile 38 zirkuliert.

Die Arbeitskolben 35 können in die Zylinder 6 der Zylinder-Kolbeneinheiten 2, 3 integriert sein, sodaß letztere drei Wirkzonen haben: eine Reaktionszone 39, in welcher die Dehnungsfluide 8 arbeiten, eine Vorspannzone 40, in der sie über die Vorspannfluide 9 gekoppelt sind, und eine Arbeitszone 41, in welcher die Auskopplung der Bewegung über das Arbeitsfluid 36 erfolgt. Der Arbeitsdruck des Arbeitsfluids 36 entspricht im wesentlichen dem wärmedehnungsbedingten Reaktionsdruck des Dehnungsfluids 8 abzüglich des Vorspanndrucks pᵥ des Vorspannfluids 9.

Die Erfindung ist nicht auf die dargestellten Ausführungsformen beschränkt, sondern umfaßt alle Varianten und Modifikationen, die in den Rahmen der angeschlossenen Ansprüche fallen. So könnte beispielsweise eine größere Anzahl von Zylinder-Kolbeneinheiten auch in mehreren Gruppen gruppenweise gleichlaufend angesteuert werden, um den Schaltungs- und Regelungsaufwand zu verringern; in diesem Fall könnten sich die Zylinder 6 einer Gleichlaufgruppe von Zylinder-Kolbeneinheiten auch einen gemeinsamen Wärmetauscher 16 und/oder ein gemeinsames Dehnungsfluid 8 teilen.

## Patentansprüche

1. Wärmekraftmaschine (1), insbesondere für den Niedertemperaturbetrieb zur Verwertung von Solarwärme, Abwärme aus biologischen oder industriellen Prozessen od.dgl., mit:
zumindest zwei Zylinder-Kolbeneinheiten (2 - 5), die jeweils ein unter einem Vorspanndruck (pᵥ) stehendes Dehnungsfluid (8) enthalten, welches bei einer Temperaturänderung sein Volumen ändert und so den Kolben (7) bewegt,
Mitteln (16 - 20) zur individuell steuerbaren Wärmezufuhr zum Dehnungsfluid (8) jeder Zylinder-Kolbeneinheit (2 - 5), und
einer die Wärmezufuhrmittel (16 - 19) steuernden Steuereinrichtung (21), um jedes Dehnungsfluid (8) abwechselnd erwärmen und abkühlen zu lassen und dadurch die Kolben (7) zu bewegen,
**dadurch gekennzeichnet, daß**
die Kolben (7) aller Zylinder-Kolbeneinheiten (2 - 5) von einem gemeinsamen Vorspannfluid (9) beaufschlagt sind, um einen gemeinsamen Vorspanndruck (pᵥ) auf die Dehnungsfluide (8) auszuüben,
die Steuereinrichtung (21) mit einem Druckmesser (22) für den Vorspanndruck (pᵥ) ausgestattet ist, und
die Steuereinrichtung (21) dafür ausgebildet ist, die Erwärm- und Abkühlphasen der Wärmezufuhrmittel (16 - 20) in Abhängigkeit vom gemessenen Vorspanndruck (pᵥ) zu steuern, um diesen innerhalb eines vorgegebenen Bereichs (pₘᵢₙ, pₘₐₓ) zu halten.

2. Wärmekraftmaschine nach Anspruch 1 mit zumindest drei Zylinder-Kolbeneinheiten, **dadurch gekennzeichnet, daß** die Steuereinrichtung (21) dafür ausgebildet ist, die Anzahl von Zylinder-Kolbeneinheiten (2 - 5), die sich zu einem Zeitpunkt in der Erwärmphase befinden, gegenüber der Anzahl von Zylinder-Kolbeneinheiten (2 - 5), welche sich zum selben Zeitpunkt in der Abkühlphase befinden, zu erhöhen, wenn der Vorspanndruck (pᵥ) den vorgegebenen Bereich (pₘᵢₙ, pₘₐₓ) unterschreitet, und zu verringern, wenn der Vorspanndruck (pᵥ) den vorgegebenen Bereich (Pₘᵢₙ, pₘₐₓ) überschreitet.

3. Wärmekraftmaschine nach Anspruch 1 oder 2, **dadurch gekennzeichnet, daß** die Steuereinrichtung (21) dafür ausgebildet ist, die Erwärm- und/oder Abkühlphasen individuell zu verkürzen oder zu verlängern, um den Vorspanndruck (pᵥ) innerhalb des vorgegebenen Bereichs zu halten.

4. Wärmekraftmaschine nach einem der Ansprüche 1 bis 3, **dadurch gekennzeichnet, daß** das Dehnungsfluid (8) flüssiges Kohlendioxid enthält und der Vorspanndruck (pᵥ) größer oder gleich dem Verflüssigungsdruck von Kohlendioxid bei der Arbeitstemperatur ist.

5. Wärmekraftmaschine nach einem der Ansprüche 1 bis 4, **dadurch gekennzeichnet, daß** das Vorspannfluid (9) Hydraulikflüssigkeit ist.

6. Wärmekraftmaschine nach Anspruch 5, **dadurch gekennzeichnet, daß** der Hydraulikkreis (10) des Vorspannfluids (9) mit einem elastischen Zwischenspeicher (13) ausgestattet ist.

7. Wärmekraftmaschine nach einem der Ansprüche 1 bis 6, **dadurch gekennzeichnet, daß** die Kolben (7) doppeltwirkende Kolben sind, auf deren eine Seite das Dehnungsfluid (8) und auf deren andere Seite das Vorspannfluid (9) einwirkt.

8. Wärmekraftmaschine nach einem der Ansprüche 1 bis 7, **dadurch gekennzeichnet, daß** jede Zylinder-Kolbeneinheit (2 - 5) einen Arbeitskolben (35) antreibt und alle Arbeitskolben (35) auf eine gemeinsames Arbeitsfluid (36) einer hydraulischen Last (27) wirken.

9. Wärmekraftmaschine nach einem der Ansprüche 1 bis 8, **dadurch gekennzeichnet, daß** die Wärmezufuhrmittel (16 - 20) für jede Zylinder-Kolbeneinheit (2 - 5) einen von einem Wärmeträgermedium (17) durchströmten Wärmetauscher (16) aufweisen, der mit einem von der Steuereinrichtung (21) gesteuerten Sperrventil (20) versehen ist.

10. Wärmekraftmaschine nach einem der Ansprüche 1 bis 9, **dadurch gekennzeichnet, daß** die Wärmezufuhrmittel (16 - 20) ferner Mittel (26, 29 - 32; 28) zur Zwangsabkühlung der Dehnungsfluide (8) in den Abkühlphasen umfassen.

11. Wärmekraftmaschine nach den Ansprüchen 9 und 10, **dadurch gekennzeichnet, daß** das Wärmeträgermedium (17) in der Erwärmphase unter Druck steht und die Zwangsabkühlmittel eine steuerbare Druckentspannungseinrichtung (26, 29 - 32) für jeden Wärmetauscher (16) aufweisen.

12. Wärmekraftmaschine nach Anspruch 11, **dadurch gekennzeichnet, daß** die Druckentspannungseinrichtung (26, 29 - 32) einen Unterdruck-Zwischenspeicher (29) umfaßt, der über ein steuerbares Schaltventil (26) an den Wärmtauscher (16) anschaltbar ist.

## Claims

1. Heat engine (1), in particular for low-temperature operation for the utilisation of solar heat, waste heat from biological or industrial processes or the like, with:
at least two cylinder-piston units (2-5), each containing an expansion fluid (8), which stands under prestressing pressure (pᵥ) and which changes its volume in the case of a change of temperature and thus moves the piston (7),
elements (16-20) for the individually controllable supply of heat to the expansion fluid (8) of each cylinder-piston unit (2-5), and
a control means (21) controlling the heat supply elements (16-19) to allow each expansion fluid (8) to alternately heat up and cool down and thus move the pistons (7),
**characterised in that**
a common prestressing fluid (9) acts on the pistons (7) of all cylinder-piston units (2-5) in order to exert a common prestressing pressure (pᵥ) on the expansion fluids (8),
the control means (21) is fitted with a pressure gauge (22) for the prestressing pressure (pᵥ), and
the control means (21) is configured to control the heating and cooling phases of the heat supply elements (16-20) in dependence on the measured prestressing pressure (pᵥ) in order to hold this within a predetermined range (pₘᵢₙ, pₘₐₓ).

2. Heat engine according to claim 1 with at least three cylinder-piston units, **characterised in that** the control means is configured to (21) increase the number of cylinder-piston units (2-5), which are in the heating phase at a point in time, in relation to the number of cylinder-piston units (2-5), which are in the cooling phase at the same point in time, if the prestressing pressure (pᵥ) drops below the predetermined range (pₘᵢₙ, pₘₐₓ), and to reduce same if the prestressing pressure (pᵥ) exceeds the predetermined range (pₘᵢₙ, pₘₐₓ).

3. Heat engine according to claim 1 or 2, **characterised in that** the control means (21) is configured to reduce or extend the heating and/or cooling phases individually in order to hold the prestressing pressure (pᵥ) within the predetermined range.

4. Heat engine according to one of claims 1 to 3, **characterised in that** the expansion fluid (8) contains liquid carbon dioxide and the prestressing pressure (pᵥ) is higher than or equal to the condensation pressure of carbon dioxide at the operating temperature.

5. Heat engine according to one of claims 1 to 4, **characterised in that** the prestressing fluid (9) is hydraulic fluid.

6. Heat engine according to claim 5, **characterised in that** the hydraulic circuit (10) of the prestressing fluid (9) is fitted with a flexible intermediate reservoir (13).

7. Heat engine according to one of claims 1 to 6, **characterised in that** the pistons (7) are double-action pistons, the expansion fluid (8) acting on one side thereof and the prestressing fluid (9) acting on the other side thereof.

8. Heat engine according to one of claims 1 to 7, **characterised in that** each cylinder-piston unit (2-5) drives a working piston (35) and all working pistons (35) act on a common working fluid (36) of a hydraulic load (27).

9. Heat engine according to one of claims 1 to 8, **characterised in that** the heat supply elements (16-20) for each cylinder-piston unit (2-5) have a heat exchanger (16), through which a heat transfer medium (17) flows and which is provided with a shutoff valve (20) controlled by the control means (21).

10. Heat engine according to one of claims 1 to 9, **characterised in that** the heat supply elements (16-20) additionally comprise elements (26, 29-32; 28) for forced cooling of the expansion fluids (8) in the cooling phases.

11. Heat engine according to claims 9 and 10, **characterised in that** the heat transfer medium (17) stands under pressure in the heating phase and the forced cooling elements have a controllable pressure release means (26, 29-32) for each heat exchanger (16).

12. Heat engine according to claim 11, **characterised in that** the pressure release means (26, 29-32) comprises a vacuum intermediate reservoir (29), which can be connected to the heat exchanger (16) by means of a controllable switch valve (26).

## Revendications

1. Moteur thermique (1), en particulier pour le fonctionnement à basse température pour le recyclage de la chaleur solaire, de la chaleur rejetée par les processus industriels ou biologiques ou autres, avec :
au moins deux unités à piston et cylindre (2-5) contenant respectivement un fluide d'expansion (8) soumis à une pression de précontrainte (pᵥ), lequel modifie son volume et déplace donc le piston (7) lors d'une variation de température,
des moyens (16-20) d'alimentation de chaleur commandable individuellement vers le fluide d'expansion (8) de chaque unité à piston et cylindre (2-5), et
un dispositif de commande (21) commandant les moyens d'alimentation de chaleur (16-19), pour chauffer et laisser refroidir en alternance chaque fluide d'expansion (8) et ainsi déplacer les pistons (7),
**caractérisé en ce que**
les pistons (7) de toutes les unités à piston et cylindre (2-5) sont soumis à un fluide de précontrainte (9) commun, pour exercer une pression de précontrainte (pᵥ) commune sur les fluides d'expansion (8),
le dispositif de commande (21) est équipé d'un manomètre (22) pour la pression de précontrainte (pᵥ),
le dispositif de commande (21) est conçu pour commander les phases de chauffage et de refroidissement des moyens d'alimentation de chaleur (16-20), en fonction de la pression de précontrainte (pᵥ) mesurée, pour maintenir celle-ci dans une plage prédéfinie (pₘᵢₙ, pₘₐₓ).

2. Moteur thermique selon la revendication 1, avec au moins trois unités à piston et cylindre, **caractérisé en ce que** le dispositif de commande (21) est conçu pour augmenter le nombre d'unités à piston et cylindre (2-5) se trouvant dans la phase de chauffage à un moment donné, par rapport au nombre d'unités à piston et cylindre (2-5) se trouvant à ce même moment dans la phase de refroidissement, lorsque la pression de précontrainte (_{Pv}) tombe en-dessous de la plage prédéfinie (pₘᵢₙ, pₘₐₓ), et pour réduire celui-ci lorsque la pression de précontrainte (pᵥ) dépasse la plage prédéfinie (pₘᵢₙ, pₘₐₓ).

3. Moteur thermique selon la revendication 1 ou 2, **caractérisé en ce que** le dispositif de commande (21) est conçu pour raccourcir ou rallonger individuellement les phases de chauffage et/ou de refroidissement, pour maintenir la pression de précontrainte (pᵥ) dans la plage prédéfinie.

4. Moteur thermique selon l'une des revendications 1 à 3, **caractérisé en ce que** le fluide d'expansion (8) contient du dioxyde de carbone liquide, et la pression de précontrainte (pᵥ) est égale ou supérieure à la pression de liquéfaction du dioxyde de carbone à la température de travail.

5. Moteur thermique selon l'une des revendications 1 à 4, **caractérisé en ce que** le fluide de précontrainte (9) est un liquide hydraulique.

6. Moteur thermique selon la revendication 5, **caractérisé en ce que** le circuit hydraulique (10) du fluide de précontrainte (9) est équipé d'un réservoir intermédiaire élastique (13).

7. Moteur thermique selon l'une des revendications 1 à 6, **caractérisé en ce que** les pistons (7) sont des pistons agissant doublement, sur un côté desquels agit le fluide d'expansion (8) et sur l'autre côté desquels agit le fluide de précontrainte (9).

8. Moteur thermique selon l'une des revendications 1 à 7, **caractérisé en ce que** chaque unité à piston et cylindre (2-5) entraîne un piston de travail (35), et tous les pistons de travail (35) agissent sur un fluide de travail commun (36) d'une charge hydraulique (27).

9. Moteur thermique selon l'une des revendications 1 à 8, **caractérisé en ce que** les moyens d'alimentation de chaleur (16-20) pour chaque unité à piston et cylindre (2-5) comporte un échangeur de chaleur (16) traversé par un fluide caloporteur (17), lequel est pourvu d'une soupape d'arrêt (20) commandée par le dispositif de commande (21).

10. Moteur thermique selon l'une des revendications 1 à 9, **caractérisé en ce que** les moyens d'alimentation de chaleur (16-20) comprennent en outre des moyens (26, 29-32 ; 28) pour le refroidissement forcé des fluides d'expansion (8) dans les phases de refroidissement.

11. Moteur thermique selon les revendications 9 et 10, **caractérisé en ce que** le fluide caloporteur (17) est sous pression pendant la phase de chauffage, et les moyens de refroidissement forcé comportent un dispositif de détente de pression (26, 29-32) commandable pour chaque échangeur de chaleur (16).

12. Moteur thermique selon la revendication 11, **caractérisé en ce que** le dispositif de détente de pression (26, 29-32) comprend un réservoir intermédiaire de sous-pression (29), lequel peut être raccordé à l'échangeur de chaleur (16) par le biais d'une soupape de commutation (26) commandable.
